(19) **Europäisches Patentamt / European Patent Office / Office européen des brevets**

(11) **EP 2 451 292 B1**

(12) **EUROPEAN PATENT SPECIFICATION**

(45) Date of publication and mention of the grant of the patent:
**11.09.2013 Bulletin 2013/37**

(21) Application number: **10736977.9**

(22) Date of filing: **09.07.2010**

(51) Int Cl.:
*A23C 3/03* $^{(2006.01)}$

(86) International application number:
**PCT/DK2010/050183**

(87) International publication number:
**WO 2011/003426 (13.01.2011 Gazette 2011/02)**

(54) **A DRINKABLE ACIDIFIED DAIRY PRODUCT BASED ON ACID WHEY AND A PROCESS OF PREPARING IT**

TRINKBARES GESÄUERTES MILCHPRODUKT AUF DER BASIS VON SAUERMOLKE UND HERSTELLUNGSVERFAHREN DAFÜR

BOISSON LACTEE ACIDIFIEE A BASE DE LACTOSERUM ACIDE ET SON PROCEDE DE PREPARATION

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **10.07.2009 DK 200970059**

(43) Date of publication of application:
**16.05.2012 Bulletin 2012/20**

(73) Proprietor: **Arla Foods amba**
**8260 Viby J (DK)**

(72) Inventors:
• **ANDERSEN, Claus**
**DK-8260 Viby J (DK)**

• **JENSEN, Torben**
**DK-8260 Viby J (DK)**
• **BØJLESEN, Lene**
**DK-8260 Viby J (DK)**

(74) Representative: **Østergaard, Steen**
**Guardian IP Consulting I/S**
**Diplomvej, Building 381**
**2800 Kgs. Lyngby (DK)**

(56) References cited:
**EP-A1- 0 471 904**   **WO-A1-2005/016015**
**WO-A1-2008/092458**   **US-A- 1 492 981**
**US-A- 4 110 476**   **US-A- 4 435 432**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Technical field of the invention**

The present invention relates to a process for the manufacture of dairy products containing acid whey and the products produced thereby. More specifically, the invention relates to a drinkable, acidified dairy product based on acid whey and processes for the manufacture thereof without coagulum formation after acidification.

**Background of the invention**

Normally, when manufacturing drinking yoghurt or drinkable, acidified dairy products the product base is milk adjusted to an appropriate fat content. Typically, the milk is of bovine origin. After heat treatment, e.g. at 95 deg. C for 5 min., the milk may be inoculated with a starter culture, which is often based on bacteria from strains of *S. thermophilus* and *L. bulgaricus.* During the fermentation the pH of the inoculated milk is reduced, and a coagulum is formed. When the fermentation is terminated the coagulum is broken by stirring, which typically is followed by adding fruit or juice concentrate for flavouring. This mixture is finally homogenized and filled in suitable containers.
Important quality parameters for drinking yoghurt or drinkable, acidified dairy products are e.g. mouth-feel, creaminess and a low degree of syneresis, i.e. low expulsion of whey during storage and no phase separation. However, many drinkable, acidified dairy products suffer from syneresis, which gives the consumer an unpleasant experience when drinking this healthy beverage.
In the prior art the addition of sweet whey protein to yoghurt-like products has gained considerable interest, whereas the use of so-called acid whey still is perceived as challenging.
In WO 2008/092458 the present inventors described a process for the manufacturing of a drinking yoghurt wherein a quantity of whey product base and a quantity of fermented milk product base are mixed to prepare a drinking yoghurt comprising casein and whey proteins in a casein :whey protein ratio of from 4:96 to 12:88 (w/w).

**Summary of the invention**

An object of the present invention is to provide an improved process for the manufacturing of an acidified, drinkable dairy product.
The present inventors have observed that the use of acid whey in dairy products gives rise to significant challenges during processing and in obtaining end products having acceptable organoleptic properties. These challenges have previously led to complex processes where the casein-containing ingredients of the dairy product had to heat treated and fermented separately before being mixed with acid whey.
The present inventors have found that, surprisingly and contrary to the expectations of the art, the process of producing a drinkable, acidified dairy product can be simplified by performing the acidification on a mixture which both contains acid whey and casein.
Thus, an aspect of the invention relates to a process for making an acidified, drinkable dairy product without coagulum formation after the acidification, said drinkable dairy product having a casein: whey protein ratio of from 0.5: 99.5 to 12: 88 (w/w) , the process comprising the steps of

    a) providing a heat treated composition or a composition of heat treated portions having a casein:whey protein ratio of 0.5:99.5 (w/w) to 12:88 (w/w), comprising

    -    acid whey,
    -    casein,
    -    whey protein, and
    -    carbohydrate;

    b) adding an acidifying agent to the composition of step a), thereby obtaining a mixture; and

    c) allowing the acidifying agent to reduce the pH of the mixture of step b) thereby producing said drinkable acidified dairy product.

For example, the process may be a process for making a drinkable fermented dairy product without coagulum formation after fermentation, said drinkable dairy product having a casein:whey protein ratio of from 0.5:99.5 to 12:88 (w/w), the process comprising the steps of a) providing a heat treated composition or a composition of heat treated portions having a casein:whey protein ratio of from 0.5:99.5 to 12:88 (w/w), comprising acid whey, casein, whey protein,

and carbohydrate; b) inoculating the composition with a starter culture to obtain an inoculated composition; and c) incubating the inoculated composition under conditions permitting the starter culture to become metabolically active to produce said drinkable fermented dairy product.

Also disclosed herein is a drinkable, acidified dairy product obtainable by the process according to the invention.

The drinkable, acidified dairy product preferably has the same flavour and organoleptic characteristics as a traditional drinking yoghurt but preferably has, compared to traditional drinking yoghurt, a different protein structure and a different composition with regard to the content of casein and whey proteins.

Another aspect of the present invention relates to a drinkable, acidified dairy product comprising casein and acid whey protein in a casein :whey protein ratio of from 0.5:99.5 to 3.9:96.1 (w/w).

Further disclosed herein is a fruit flavoured smoothie drink comprising the drinkable acidified dairy product according to the invention.

**Brief description of the figures**

The invention may be described in the following non-limiting figures, which are presented for illustrative purposes only.

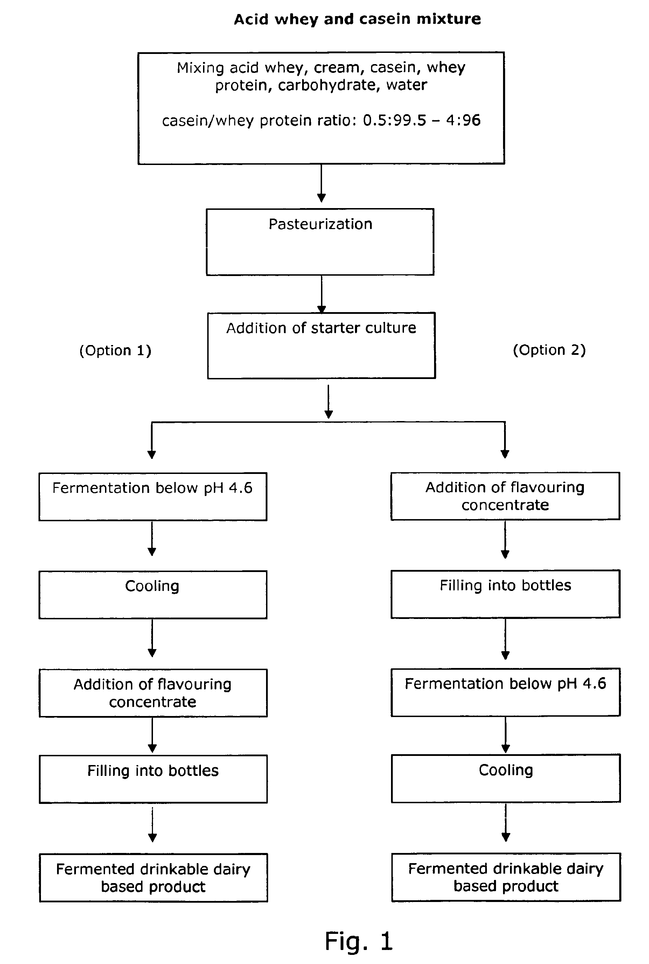

Figure 1 represents a first embodiment of the present invention and shows a schematic overview of the process according to the invention for making a drinkable fermented dairy product based on acid whey. In this case all the ingredients for the dairy product are directly mixed before fermentation. The casein/whey protein-ratio is from 0.5: 99.5 to 4:96.

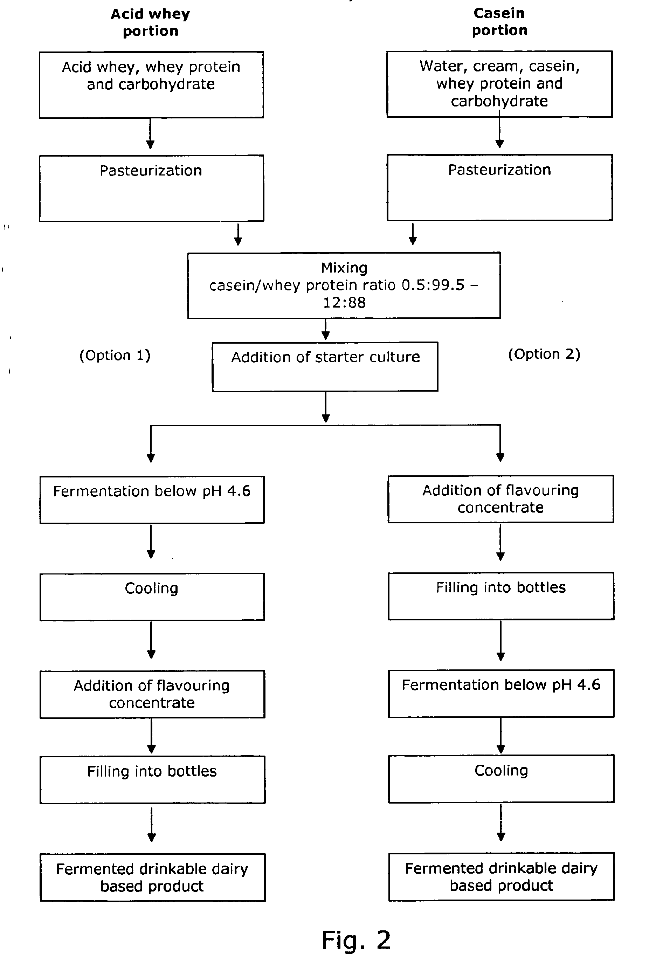

Figure 2 represents a second embodiment of the present invention and shows a schematic overview of the process according to the invention for making a drinkable fermented dairy product based on acid whey. In this case the acid whey portion and the casein portion are heat treated separately. The heat treated portions are subsequently mixed, followed by fermentation. The casein/whey protein-ratio is from 0.5:99.5 to 12:88.

The present invention will now be described in more detail in the following.

**Detailed description of the invention**

In the present context, the terms "drinking or drinkable yoghurt/yogurt or yogurt drink", less commonly "yoghourt" or "yogourt", or " drinkable acidified dairy product" are used interchangeably and relate to a dairy product produced by acidification, such as e.g. bacterial fermentation or chemical acidification, and having a low viscosity. The viscosity of conventional drinking yoghurt based on milk at a temperature of 10°C is from 50-400 centipoise (cP), e.g. measured by the method described in Example 5, while a stirred yoghurt has a viscosity of above 10.000 cP.

In the context of the present invention, the term "coagulum" relates to the formation of protein network due to the acidification of a dairy product, such as milk. Coagulum may be detected as visible lumps in the dairy product when the drinkable, acidified dairy product is poured from an open beaker in as fine, free-falling beam as possible.

Generally, coagulum may be formed during and/or after the acidification of a milk product, and in some preferred embodiments of the invention the present process is a process for making an acidified, drinkable dairy product without coagulum formation during and after the acidification.

"Whey" or "liquid whey" is a collective term referring to the serum or watery part of milk that remains after the manufacture of cheese. The milk may be from one or more ruminants, including domesticated ruminants, e.g. cows, sheep, goats, yaks, water buffalo, bison, Alpaca, Llama, horses or camels. Whey derived from bovine milk, i.e. milk from cows, is presently preferred.

In the present context, the term "native acid whey" (also known as sour whey) relates to the whey liquid, which is obtained during chemical or biological acidification of milk products, which for example take place in the production of cottage cheese or quark, or in the production of casein/caseinates. The acid whey used in the invention may be native acid whey, e.g. filtered to remove particles of coagulated casein and fat. The acid whey is preferably in the form of a liquid, e.g. an aqueous solution. For example, native acid whey may be perceived as an aqueous composition comprising 0.4 - 1.0% whey protein, 4.0 - 4.9% lactose, 0.05 - 0.15% fat, 0.1-0.15% calcium, 0.4 - 0.7% vitamins and minerals. Alternatively, the native acid whey may be perceived as an aqueous composition comprising 0.4 - 1.0% whey protein, 4.0 - 4.9% lactose, 0.03 - 0.15% fat, 0.1-0.15% calcium, 0.4 - 0.7% vitamins and other minerals. In yet an alternatively, acid whey may be characterised as composition containing, on a dry weight basis, 7-17% whey protein, 66-83% carbohydrate (typically lactose), 0.5-3% fat, 1-3% calcium, 3-7% vitamins and other minerals. The acid whey may also be a concentrated native acid whey, which may be prepared by ultrafiltering the native acid whey, typically concentrating the concentration of the proteins by a factor of 2-4, whereas the concentration of the smaller molecules of the concentrated

EP 2 451 292 B1

acid whey remains largely unchanged.

Typically, native acid whey provided by bacterial acidification of a milk product additionally contains at least 0.2% (w/w) lactic acid, and preferably at least 0.4% (w/w) lactic acid. For example, native acid whey provided by bacterial acidification of a milk product may contain an amount of lactic acid in the range of 0.2- 0.8% (w/w) , and preferably in the range of 0.3- 0.7% (w/w) .

Additionally, native acid whey typically contains an amount of ash, e.g. including salts and small food acids, of at least 0.6% (w/w) , and preferably in the range of 0.6- 1.5% (w/w) .

It is also possible to use acid whey in the form a powder, e.g. a powder of dried native acid whey or a powder of dried concentrated native acid whey.

In the context of the present invention, the term "dry weight" of a substance relates to the weight of the substance if it had been dried to a water content of 4% (w/w) water.

The acid whey may be used in native, non-concentrated form, e.g. filtered to remove particles of fat or coagulated casein. Alternatively the acid whey may be used in concentration form, where water has been removed from the native acid whey and content of solids have been increased. The native acid whey may e.g. be concentrated using evaporation techniques, nanofiltration and/or reverse osmosis.

Typically, acid whey contains no or only a limited amount of caseino glycomacropeptide (cGMP) , which is formed by rennet based coagulation of casein during cheese production. Thus, in some embodiments of the invention the acid whey comprises at most 1% cGMP (w/w) relative to the dry weight of the acid whey. For example, the acid whey may comprise at most 0.1% cGMP (w/w) relative to the dry weight of the acid whey, preferably at most 0.01% cGMP (w/w) , and even more preferably at most 0.001% cGMP (w/w) relative to the dry weight of the acid whey.

Unless it is stated otherwise, percentages mentioned herein are all by weight relative to the weight of the product, mixture, or composition to which the percentages relate.

The pH value of acid whey in liquid form is typically range between pH 3.8 and 5.0., preferably between pH 3.8 and 4.8, and even more preferably between pH 3.8 and 4.6.

In the context of the present invention, the term "sweet whey" relates to the whey liquid, which is obtained during rennet-based coagulation of milk products, which for example take place in the production of yellow cheese.

The term "whey protein powder" relates to the product obtained by drying the liquid sweet whey. In the present context, the expressions "whey protein concentrate (WPC)" relates to the dry portion of liquid whey obtained by the removal of sufficient non-protein constituents from whey so that the dry product contains not less than 25% protein. The term "whey protein isolate (WPI)" is for the dry portion of whey obtained by the removal of non-protein constituents from whey so that the dry whey product contains more than 90% whey protein on DS% basis. In some preferred embodiments of the invention the used whey powder concentrate and/or whey powder isolate is derived from sweet whey.

"Whey protein" is the name for a collection of globular proteins that can be isolated from liquid whey. It is typically a mixture of beta-lactoglobulin (~65%), alpha-lactalbumin (~25%), and serum albumin (~8%), which are soluble in their native forms, independent of pH. Whey protein derived from sweet whey additionally contains caseino-glycomacropeptide (cGMP).

The terms "casein", "calcium caseinate" and "caseinate" are used herein in their traditional meaning and relate to the most predominant phosphoprotein found in milk and cheese. Milk-clotting proteases act on the soluble portion of the caseins, K-Casein, thus creating an unstable micellar state that results in the clot formation which is utilized in cheese production.

Preferred embodiments

The present inventors found that, surprisingly, it was possible even further to simplify the process of making drinking yoghurt compared to the disclosure of WO 2008/092458. Now provided is a process which involves a direct mix of acid whey and casein-containing ingredients before acidification even though acid whey is present in the recipe for the manufacturing of a drinkable, acidified dairy product as shown in the below examples.

Thus, as used herein the expression "direct mix", "directly mix" or "mixing directly" relates to mixing acid whey and casein prior to the acidification step. By being able to directly mix these the ingredients, including the acid whey and casein, before the acidification the process becomes simplified and easier to control.

Additionally, it was found that it was possible to further reduce the casein content in the dairy product, and at the same time partially replacing the casein with whey proteins in order to obtain a drinkable, acidified dairy product with excellent and improved organoleptic and physical properties, but with no formation of a coagulum.

Thus, the provided process involving a direct mix of ingredients before acidification and the elimination of the breaking of the coagulum, results in a process which fulfils the desire of dairy plants for simplifying the production of an acidified drinkable dairy product. Furthermore, due to the use of a relatively high concentration of acid whey, which is considered a low value product, compared to the concentration of casein, which is considered a high value product, the present invention provides profitable advantages over the traditional manufacturing procedure for drinking yoghurt. This will not only provide improved process economy, but also provide a much better utilization of a low value raw material.

Due to the relatively high content of whey proteins, originating both from acid whey and from further added whey protein, and the relatively low content of casein, the dairy product according to the invention is an excellent choice for individuals who want to enjoy a drinkable, acidified dairy product with the same taste and texture as traditional drinking yoghurt while simultaneously enjoying the nutritional benefits of whey proteins.

As stated above, a first aspect of the present invention relates to a process for making an acidified, drinkable dairy product without coagulum formation after the acidification, said drinkable dairy product having a casein :whey protein ratio of from 0.5:99.5 to 12:88 (w/w), the process comprising the steps of

a) providing a heat treated composition or a composition of heat treated portions having a casein:whey protein ratio of 0.5:99.5 (w/w) to 12:88 (w/w), comprising

- acid whey,
- casein,
- whey protein, and
- carbohydrate;

b) adding an acidifying agent to the composition of step a), thereby obtaining a mixture; and

c) allowing the acidifying agent to reduce the pH of the mixture of step b) thereby producing said drinkable acidified dairy product.

For example, the invention may relate to a process for making a drinkable fermented dairy product without coagulum formation after fermentation, said drinkable dairy product having a casein:whey protein ratio of from 0.5:99.5 to 12:88 (w/w), the process comprising the steps of a) providing a heat treated composition or a composition of heat treated portions having a casein:whey protein ratio of from 0.5:99.5 to 12:88 (w/w), comprising acid whey, casein, whey protein and carbohydrate; b) inoculating the composition with a starter culture to obtain an inoculated composition; and c) incubating the inoculated composition under conditions permitting the starter culture to become metabolically active to produce said drinkable fermented dairy product.

A further aspect of the invention relates to a drinkable acidified dairy product having a casein:whey protein ratio which is from 0.5:99.5 to 12:88 (w/w). Depending on the dairy product which is desired to be produced, the casein :whey protein ratio may be from 0.5:99.5 to 12:88 (w/w), such as from 0.5:99.5 to 8:92 (w/w), including from 0.5:99.5 to 4:96 (w/w), e.g. from 0.5:99.5 to 3.5:96.5 (w/w) or 0.5:99.5 to 3.9:96.1 (w/w), such as from 0.5:99.5 to 3:97 (w/w), including 1:99 to 12:88 (w/w), e.g. from 1.5:98.5 to 8:92 (w/w), such as from 2:98 to 4:96 (w/w), including from 1.5:98.5 to 3.5:96.5 (w/w). In a preferred embodiment, the casein:whey protein ratio is from 0.5:99.5 to 4:96 (w/w).

The step a) of the present process involves the provision of a heat treated composition or a composition of heat treated ingredients/portions having a casein:whey protein ratio of from 0.5:99.5 to 12:88 (w/w), comprising acid whey, casein, whey protein and carbohydrate.

The present process is based on the surprising finding that all the above-mentioned ingredients can be mixed before the acidification of the composition. It was further found that if the casein concentration in the composition is higher than about 4% of the total protein concentration or the casein:whey protein ratio is from 4:96 to 12:88 (w/w), it may be preferred to separately prepare and heat treat the acid whey ingredient/portion and the casein ingredient/portion before mixing them together.

Thus, in a useful embodiment, the composition of heat treated portions comprises portions selected from the group consisting of a portion comprising acid whey and a portion comprising casein. For example, the composition of heat treated portions may comprise a portion comprising acid whey and a portion comprising casein. All portions used in the composition of heat treated portions have preferably been heat treated as described herein. The portion comprising acid whey and the portion comprising casein may be heat treated separately before being combined in said composition. This may be especially necessary when the heat treated composition or a composition of heat treated portions has a casein: whey protein ratio of from 4: 96 to 12: 88 (w/w) .

Thus, the acid whey and the casein may be mixed directly and heat treated together resulting in a heat treated composition, or an acid whey ingredient/ portion and a casein ingredient/ portion may be separately prepared and heat treated and mixed subsequently resulting in the above mentioned "composition of heat treated portions". It will be understood that the further added whey protein and carbohydrate may be present either in the acid whey portion or the casein portion or in both portions.

In some preferred embodiments of the invention the heat treated composition is provided by heat treating a combined composition which both contains the acid whey and the casein of the drinkable, acidified dairy product. As acid whey is present in this combined composition the pH of the combined composition is typically at most pH 6.2, preferably at most 6.0, and even more preferably at most pH 5.8. In some preferred embodiments, the pH of the combined composition is between 5.2 and 6.2, preferably between 5.4 and 6.0, and even more preferably between 5.5 and 5.9. The pH of the combined composition may for example be in the range of 5.6 and 6.1.

The preparation of the composition or the acid whey and casein ingredients/portions, is preferable performed at a temperature between 0 and 50°C, more preferable at a temperature between 2-20°C, most preferable at a temperature between 5-10°C.

After the preparation of the composition or the portions, the composition or the portions may be subjected to a swelling treatment at a given temperature for a specified period of time in order to allow the addition of the whey protein hydrate/powder, which is free of clotting. Thus, in a preferred embodiment, the composition or portions is/are subjected to a swelling treatment at a temperature between 0 and 40°C for 0 to 24 hours. In further embodiments, the swelling treatment is accomplished at a temperature between 0 and 40°C, such as at a temperature between 0 and 25°C, including at a temperature between 0 and 10°C for 0 and 24 hours, e.g. at a temperature between 0 and 5 hours, such as at a temperature between 15 and 30 minutes.

After the swelling treatment, the resulting composition and portions are subjected to a preheating treatment, followed by a homogenization treatment and a pasteurization treatment and finally to a cooling step.

Thus, in useful embodiments, the composition and portions is/are preheated at a temperature between 40 and 90°C, preferably at a temperature between 45 and 70°C, 55 and 65°C or 70 and 90°C and most preferable at 60°C. The pre- heating step may be for a few seconds, such as 10 sec.

The homogenisation step of the composition and portions may be performed, preferably by a two step homogenisation, at preferred pressures such as 300 and 25 bar, 250 and 40 bar, most preferably at 200 and 50 bar.

The pasteurization or heat treatment of the composition and portions may be performed at a temperature between 70 and 100°C, 70-98°C, 75-95°C, 70-90°C and most preferable at 95°C for 5-6 minutes resulting in the heat treated composition or the heat treated ingredients or portions.

In some embodiments of the invention the heat treated composition or the heat treated portions are provided by heating the composition or the portions to a temperature of at least 70 degrees C. The heat treated composition or the heat treated portions may e.g. be provided by heating the composition or the portions to a temperature of at least 80 degrees C, preferably at least 85 degrees C, and even more preferably at least 90 degrees C.

For example, the heat treated composition or the heat treated portions may be provided by exposure to UHT treatment, i.e. heating to a temperature of 140-150 degrees C and holding the temperature for approx. 2-4 sec.

Subsequently, the heat treated composition or the heat treated portions is/are cooled, for example to a temperature between 32 and 43°C.

The acid whey used in the present invention may be prepared as a by-product of the manufacture of a dairy product selected from the group consisting of fresh cheese, cottage cheese, cream cheese, quark, fromage frais and a combination thereof, according to methods known in the prior art. Thus, the acid whey may be obtained when separating the cloudy liquid from the solid curd resulting from the coagulation of the milk by means of decreasing the pH to the iso-electric pH.

Due to the use of acid whey, the process economy is improved compared to the traditional process of making drinking yoghurt and this low value raw material is utilized much better. In some preferred embodiments of the invention the heat treat composition or composition of heat treated portions comprises at least 15% (w/w) acid whey, preferably at least 25% (w/w), and even more preferably at least 35% (w/w). The heat treat composition or composition of heat treated portions comprises may comprise at least 45% (w/w) acid whey. For example, the heat treat composition or composition of heat treated portions comprises may comprise at least 50% (w/w) acid whey, preferably at least 55% (w/w), and even more preferably at least 60% (w/w) acid whey. Even higher content of acid whey may be preferred in the heat treat composition or composition of heat treated portions such as e.g. at least 70% (w/w) acid whey.

Acid whey is a composition comprising many components. The lactose content of useful acid whey in the present process may e.g. be between 4.0 and 4.9% lactose. Furthermore, acid whey useful in the present process may comprise between 0.4 and 1.0% whey protein, such as between 0.5 and 1.0% whey protein, including between 0.4 and 0.8% whey protein. Other useful types of acid whey are described herein.

The present inventors found that in order to obtain the desired flavour and organoleptic properties of the drinkable dairy product, the total protein content of the composition is preferably adjusted to a range from about 0.9% (w/w) to about 3% (w/w). Alternatively, the total protein content of the composition may be adjusted to a range from about 0.5% (w/w) to about 4.5% (w/w) This may e.g. be accomplished by the addition or the presence of a whey protein other than the whey protein provided by the acid whey in the heat treated composition or a composition of heat treated portions.

In useful embodiments, the whey protein is provided in the form of a concentrate selected from the group consisting of whey protein isolate (WPI) and whey protein concentrate (WPC) as defined above. WPC may comprise between 20 and 80% whey protein (w/w), such as between 25 and 35% whey protein (w/w), or about 30% whey protein (w/w), such as between 30 and 75% whey protein (w/w), including between 50 and 75% whey protein (w/w), or about 70% whey protein (w/w). The whey protein is preferably provided in the form of a whey protein concentrate.

The whey protein used in addition to the protein of the acid whey is preferably whey protein concentrated obtained from sweet whey.

Thus, some in preferred embodiments of the invention step a) of the method involves providing a heat treated composition or a composition of heat treated portions having a casein: whey protein ratio of 0.5: 99.5 (w/w) to 12: 88 (w/w) , comprising

- acid whey,
- casein,
- whey protein concentrate obtained from sweet whey, and
- carbohydrate.

The total protein content of the heat treated composition or the composition of heat treated portions may preferably be in the range from about 0.9% (w/w) to about 3.0% (w/w). In preferred embodiment the total protein content is in the range from about 0.9% (w/w) to about 2.7% (w/w) or in the range from about 1.8% (w/w) to about 2.3% (w/w), such as in the range from about 1.7% (w/w) to about 2.6%(w/w), including in the range from about 1.7% (w/w) to about 2.4% (w/w), e.g. in the range from about 1.8% (w/w) to about 2.3% (w/w), in the range from about 1.9% (w/w) to about 2.3% (w/w), in the range from about 2% (w/w) to about 2.2% (w/w). However, in a preferred embodiment the total protein content is 2.4% (w/w).

In preferred embodiments, the heat treated composition or the composition comprising heat treated portions is one wherein at the most 12% (w/w) of the total protein content originates from acid whey, such as at the most 9% (w/w), e.g. at the most 6% (w/w), including at the most 4% (w/w).

In one embodiment, the content of the further added whey protein in the heat treated composition or the composition comprising heat treated portions is between 6.0% and 7.2% (w/w), preferable in an amount of between 6.1% and 7.1% (w/w), such as between 6.2% and 7.0% (w/w), including between 6.3% and 6.9% (w/w), e.g. between 6.4% and 6.8 % (w/w), such as between 6.5% and 6.7% (w/w) and in a most preferred embodiment the amount of added whey protein is 6.6 % (w/w).

In preferred embodiments, at least 83% (w/w) of the total protein content in the heat treated composition or the composition comprising heat treated portions originates from the added whey protein, such as at least 85% (w/w), e.g. at least 90% (w/w), including at least 92% (w/w).

For example, at least 83% (w/w) of the total protein content in the heat treated composition or the composition comprising heat treated portions may originate from the added sweet whey protein, such as at least 85% (w/w), e.g. at least 90% (w/w), including at least 92% (w/w).

In accordance with the present invention, the heat treated composition or the composition of heat treated portions is one wherein the whey protein concentration is in the range from about 0.7% (w/w) to 2.99% (w/w), such as in the range from about 0.83% (w/w) to 2.88% (w/w), including in the range from about 0.86% (w/w) to about 2.76% (w/w), e.g. in the range from about 0.90% (w/w) to about 2.64% (w/w).

In further embodiments, the heat treated composition or the composition of heat treated portions is one wherein the whey protein concentration is in the range from about 0.70% (w/w) to about 2.99% (w/w), such as in the range from about 0.87% (w/w) to about 2.88% (w/w), including in the range from about 0.90% (w/w) to about 2.70% (w/w), e.g. in the range from about 0.7% (w/w) to about 0.24% (w/w), such as in the range from about 0.8% (w/w) to about 2.2% (w/w), including in the range from about 0.9% (w/w) to about 1.6% (w/w).

In still further embodiments, the heat treated composition or the composition of heat treated portions is one wherein the whey protein concentration is in the range from about 0.7% (w/w) to about 2.80% (w/w), such as in the range from about 0.8% (w/w) to about 2.75% (w/w), including in the range from about 0.90% (w/w) to about 2.60% (w/w), e.g. in the range from about 1.00% (w/w) to about 2.50% (w/w), such as in the range from about 1.6% (w/w) to about 2.40% (w/w).

The casein or caseinate used in the present process may preferably originate from a dairy product selected from the group consisting of cream, skim milk and full fat milk. Furthermore, a variety of casein components can be used to create the balance between casein/caseinate and whey proteins in the present composition. Useful examples of casein providing the dairy product with a desired mouth feel include casein of micellar origin from normal milk or from Na-caseinate.

In accordance with the present invention, the heat treated composition or the composition of heat treated portions is one wherein the casein concentration is in the range from about 0.0045% (w/w) to 0.36% (w/w), such as in the range from about 0.0045% (w/w) to 0.015% (w/w), including in the range from about 0.036% (w/w) to about 0.12% (w/w), e.g. in the range from about 0.072% (w/w) to about 0.24% (w/w), such as in the range from about 0.108% (w/w) to about 0.36% (w/w).

In further embodiments, the heat treated composition or the composition of heat treated portions is one wherein the casein concentration is in the range from about 0.0045% (w/w) to about 0.12% (w/w), such as in the range from about 0.0045% (w/w) to about 0.10% (w/w), including in the range from about 0.0045% (w/w) to about 0.07% (w/w), e.g. in the range from about 0.0045% (w/w) to about 0.02% (w/w), such as in the range from about 0.007% (w/w) to about 0.01% (w/w), including in the range from about 0.010% (w/w) to about 0.12% (w/w), e.g. in the range from about 0.015% (w/w) to about 0.12% (w/w), such as in the range from about 0.025% (w/w) to about 0.12% (w/w), including in the range from about 0.07% (w/w) to about 0.12% (w/w).

In still further embodiments, the heat treated composition or the composition of heat treated portions is one wherein the casein concentration is in the range from about 0.06% (w/w) to about 0.36% (w/w), such as in the range from about 0.072% (w/w) to about 0.36% (w/w), including in the range from about 0.108% (w/w) to about 0.36% (w/w), e.g. in the range from about 0.24% (w/w) to about 0.36% (w/w), such as in the range from about 0.06% (w/w) to about 0.22% (w/w), e.g. in the range from about 0.072% (w/w) to about 0.20% (w/w), including in the range from about 0.108% (w/w) to about 0.20% (w/w), such as in the range from about 0.072% (w/w) to about 0.14% (w/w).

In one embodiment, a further component having no or a low concentration of casein is added to the mixture, the heat treated composition and/or the composition of heat treated portions.

The carbohydrate present in the composition according to the invention may e.g. be selected from the group consisting of glucose, sucrose, lactose and fructose. Alternatively, the carbohydrate of the heat treated composition or the composition of heat treated portions may comprise one or more carbohydrate(s) selected from the group consisting of glucose, sucrose, lactose, galactose, fructose, and a combination thereof. In a useful embodiment, the carbohydrate is present in the composition in amounts of 2-12% (w/w). In a preferred embodiment, the amount of carbohydrate is 5-9% (w/w). The addition hereof leads to an improved organoleptic quality by providing sweetness to the dairy product.

In some embodiments of the invention the heat treated composition or the composition of heat treated portions comprises a stabilising agent. Useful examples of stabilising agents are e.g. pectin, starch, and/or other hydrocolloid-forming agents. Stabilising agents tend to improve the stability of the drinkable, acidified dairy product and count-act syneresis.

In other embodiments of the invention the heat treated composition or the composition of heat treated portions comprises a non-sugar sweetener. A useful example of a non-sugar sweetener is a sugar-alcohol, such as e.g. sorbitol, xylitol, maltitol, and/or mannitol. Another example of a non-sugar sweetener is a high intensity sweetener, such as e.g. aspartame, saccharine, acesulfame, acesulfame K, sucralose and/or rebaudioside. A high intensity sweetener may be used as alternative or in addition to a sugar-alcohol.

In preferred embodiments, the lactose is selected from the group consisting of purified lactose and lactose comprised within a concentrated permeate of dairy origin. "Lactose", also known as "milk sugar" is a disaccharide composed of the two monosaccharide glucose and galactose. In the present context, the term encompasses purified lactase and lactose comprised within a concentrated permeate of dairy origin. The term "purified" does not require absolute purity; rather, it is intended as a relative definition. Isolated lactose can be conventionally purified by chromatography and/or gel electrophoresis. Purification of starting material or natural material to at least one order of magnitude, preferably two or three orders, and more preferably four or five orders of magnitude is contemplated. The expression "lactose comprised within a concentrated permeate of dairy origin", "permeate", "permeate fractions" or "milk permeate" are used interchangeably and relate to the lactose which is comprised in a by-product which is obtained when milk components (casein, butterfat) used in making cheese are concentrated by membrane filtration technology, e.g. ultrafiltration. Such by-product or milk permeate contains the lactose, and some of the soluble proteins and minerals. Thus, in a preferred embodiments, the concentrated permeate of dairy origin is a by-product of the production of a cheese selected from the group consisting of fresh cheese, soft cheese, semi-soft cheese, firm cheese, hard cheese and light cheese. The concentrated permeate of dairy origin may be dry or in a liquid state.

In useful embodiments, a fat is comprised in the heat treated composition or the composition comprising heat treated portions of step a), said fat originates from a fat-containing component selected from the group consisting of cream, butter, butter oil, skim milk, full fat milk, and vegetarian fat-containing compounds. The content of the fat in the composition is preferable within the range from 0.5 to 5% (w/w), such as from 1 to 4% (w/w), e.g. from 2 to 4.5%, including from 3 to 5% (w/w).

Due to the presence of the acid whey in the heat treated composition or the composition of heat treated portions of step a) the pH is relatively low compared to compositions with sweet whey or without any type of whey such as in traditional processes for producing a drinking yoghurt. In some preferred embodiments, the pH of the heat treated composition or composition of heat treated ingredients of step a) is between 5.2 and 6.2, such as between 5.4 and 6.0, e.g. between 5.5 and 5.9, including between 5.6 and 6.1. For example, the pH of the heat treated composition or the composition of heat treated portions is typically at most pH 6.2, preferably at most 6.0, and even more preferably at most pH 5.8.

In step b) of the process an acidifying agent is added to, and preferably also mixed with, the composition obtained from step a) and the resulting composition is referred to as the mixture. The acidifying agent may for example be a bacterial culture, typically referred to as a starter culture, in which case the addition of the acidifying agent may be perceived as an inoculation of the heat treated composition or composition of heat treated portions, and in which case one obtains an inoculated composition.

This in some embodiments of the invention the acidifying agent comprises chemical acidifying agent.

In the context of the present invention the term "chemical acidifying agent" pertains to a chemical compound capable of gradual or instantaneous reduction of the pH of the mixture.

The chemical acidifying agent may for example be a food acceptable acid and/or a lactone. Examples of useful acids are carboxylic acids such as citric acid, tartaric acid and/or acetic acid. An example of a useful lactone is glucono delta-lactone (GDL).

In some embodiments of the invention the chemical acidifying agent comprises one or more components selected from the group consisting of acetic acid, lactic acid, malic acid, citric acid, phosphorous acid or glucono delta-lactone.

The actual concentration of the chemical acidifying agent dependents on the specific formulation of the heat treated composition or the composition of heat treated portions. It is generally preferred that the chemical acidifying agent is used in a sufficient amount to reduce the pH of the mixture to at most pH 4.6.

In some preferred embodiments of the invention the acidifying agent comprises, or even is, a starter culture.

In principle, any type of starter culture traditionally used in making drinking yoghurt may be used in the present invention. Starter cultures used in the dairy industry are mixtures of lactic acid bacterial strains, but a single strain starter culture may also be useful in the present invention. Thus, in preferred embodiments, the one or more starter culture organism of the present process is of a lactic acid bacterial species selected from the group consisting of *Lactobacillus, Leuconostoc, Lactococcus,* and *Streptococcus.* Commercial starter culture comprising one or more of these lactic acid bacterial species may be useful in the present invention.

The present inventors found that it under some circumstances may be useful to use a specifically selected starter culture, depending on the desired features of the resulting product, in particular a starter culture having a desired ability to be metabolically active under specific conditions. It will be appreciated that the expression "metabolically active" refers to the capability of the starter culture to convert a substrate material such as e.g. milk or a sugar.

An example of a specifically selected starter culture could be a starter culture capable of being metabolically active under low pH conditions, e.g. at a pH below 6.6 or a pH between 5.2 and 6.2. It will be understood that the stated pH is the pH of the composition at the time or moment the starter culture is inoculated. Such a starter culture can be identified by the method described in below Example 3. An example of such a low pH-tolerant starter culture is the yoghurt culture YC-470 containing *Streptococcus thermophilus* and *Lactobacillus delbrueckii* subsp. *bulgaricus,* available from Chr. Hansen, Denmark. As described above, further low pH-tolerant starter cultures can easily be found by the method described in Example 3.

The starter culture is preferably a bacterial culture, and may e.g. comprise one or more type(s) of lactic acid bacteria.

In some preferred embodiments of the invention the starter culture comprises one or more halotolerant, acidophilic bacterial culture(s).

The amount of the added acidifying agent is typically relatively low compared to the amount of the heat treated composition or the composition of heat treated portions, and the mixture may therefore have approximately the same chemical composition as described in the context of heat treated composition or the composition of heat treated portions. The compositional features relating to the heat treated composition or the composition of heat treated portions may therefore be used to describe the mixture as well.

In some embodiments of the invention the acidifying agent dilutes the heat treated composition or the composition of heat treated portions by a factor of at most 1.05, preferably at most by a factor of 1.01, and even more preferably by a factor of at most 1.005.

Flavouring and/or aromatic agents may be added to the mixture, the heat treated composition and/or the composition of heat treated portions to obtain a flavoured drinkable fermented dairy product. Flavours may be added as solids, but are preferably added in the form of liquids such as e.g. fruit juices. Aromatic agents may e.g. be added in solid and/or liquid form. Typical agents providing a pleasant scent are based on fruits.

In step c) the acidifying agent is allowed to reduce the pH of the mixture of step b) thereby producing said drinkable, acidified dairy product.

If the mixture contains a starter culture the mixture, which is an inoculated composition, is incubated under conditions permitting the starter culture to become metabolically active to produce said fermented drinkable dairy product. In some preferred embodiments, the inoculated composition is incubated at a temperature between 32°C and 43°C until the desired pH is reached. The fermentation may be stopped by decreasing the temperature to around 10°C.

If the mixture contains a chemical acidifying agent, the chemical acidifying agent will normally start reducing the pH of the mixture as soon as the chemical acidifying agent forms part of the mixture. Some chemical acidifying agents, such as lactones and slowly dissolving acids, will provide a gradual pH reduction as they react with water or are dissolved.

The temperature during step c) is typically in the range of 20-50 degrees C, and preferably in the range of 32-45 degrees C.

An advantage of the present invention is that it does not require a homogenisation step after the acidification. Thus, in some preferred embodiments of the invention the method does not involve homogenisation of the drinkable, acidified dairy product after the acidification.

During the process, the product is typically filled in suitable containers, which may be the containers, such as e.g. plastic or glass bottles, with or without caps, in which the drinkable, acidified dairy product is to be sold to the consumer. For example, the composition of step a) may be filled in suitable containers and the subsequent method steps may take place in the containers.

Alternatively, and more preferably, the mixture of step b) may be filled in suitable containers and acidified in the containers. This is particularly advantageous as it simplifies the process, and it is possible because no coagulum is formed during or after the acidification.

It is furthermore possible to fill the drinkable, acidified dairy product in suitable containers once the acidification has ended.

In some embodiments of the invention the inoculated and fermented composition or the resulting fermented drinkable dairy product is, after incubation, filled into suitable containers. It has been found that the acidification and/or fermentation are not discontinued although a limited amount of air is available when filled in containers with a cap.

The pH of the fermented drinkable dairy product in the containers may be monitored and when a desired pH has been reached, the temperature may be decreased to terminate the fermentation.

However, in a useful embodiment the inoculated composition is filled into suitable containers before incubation. The pH may also here be monitored and when a desired pH has been reached the temperature may be decreased to terminate the fermentation.

In the context of the present invention, the terms "incubation" and "fermentation" are used interchangeably.

In an interesting embodiment, the present process further comprises the step of adding fruit or a fruit blend to the drinkable, acidified dairy product and subsequently subjecting the fruit flavoured drinkable fermented dairy product to a process to obtain a fruit flavoured smoothie drink.

The omission of the production of a protein network (coagulum) during and/or after acidification due to the low content of casein and thus to the omission to destruct such a protein network provides the drinkable, acidified dairy product obtainable by the present process a unique protein structure or at least a different protein structure compared to a drinking yoghurt produced by the traditional manufacturing process.

Further disclosed herein is a drinkable acidified dairy product obtainable by the process according to the invention. This dairy product may, besides the above mentioned characteristics, be further characterized in having a different protein structure compared to traditional produced drinking yoghurt.

A second aspect of the present invention, relates to a drinkable fermentable dairy product comprising casein and acid whey protein in a casein :whey protein ratio of from 0.5:99.5 to 3.9:96.1 (w/w).

As shown in the below examples, a casein :whey protein ratio of from 0.5:99.5 to 4:96 (w/w) in the drinkable fermentable dairy product were found optimal for keeping good sensory and organoleptic properties normally characterizing a drinking yoghurt.

The casein content in the present dairy product is preferably far below the critical value, and thus far below the normal content in traditional drinking yoghurt.

In a preferred embodiment, the dairy product is one wherein the casein concentration is in the range from about 0.0045% (w/w) to about 0.12% (w/w), such as in the range from about 0.0045% (w/w) to about 0.10% (w/w), including in the range from about 0. 0045% (w/w) to about 0.08% (w/w), e.g. in the range from about 0.0045% (w/w) to about 0.06% (w/w), such as in the range from about 0.0045% (w/w) to about 0.04% (w/w), e.g. in the range from about 0.0045% (w/w) to about 0.02% (w/w), including in the range from about 0.0045% (w/w) to about 0.01% (w/w), such as in the range from about 0.005% (w/w) to about 0.12% (w/w), e.g. in the range from about 0.010% (w/w) to about 0.12% (w/w), such as in the range from about 0.015% (w/w) to about 0.12% (w/w), including in the range from about 0.020% (w/w) to about 0.12% (w/w), such as in the range from about 0.025% (w/w) to about 0.12% (w/w), including in the range from about 0.05% (w/w) to about 0.12% (w/w).

In further embodiments, the dairy product is one wherein the whey protein concentration is in the range from about 0.70% (w/w) to about 2.99% (w/w), such as in the range from about 0.87% (w/w) to about 2.88% (w/w), including in the range from about 0.90% (w/w) to about 2.70% (w/w), e.g. in the range from about 0.7% (w/w) to about 0.24% (w/w), such as in the range from about 0.8% (w/w) to about 2.2% (w/w), including in the range from about 0.9% (w/w) to about 1.6% (w/w).

The total protein content in the acidified drinkable dairy product may be in the range from about 0.9% (w/w) to about 3.0% (w/w). In preferred embodiment the total protein content is in the range from about 0.9% (w/w) to about 2.7% (w/w) or in the range from about 1.8% (w/w) to about 2.3% (w/w), such as in the range from about 1.7% (w/w) to about 2.6%(w/w), including in the range from about 1.7% (w/w) to about 2.4% (w/w), e.g. in the range from about 1.8% (w/w) to about 2.3% (w/w), in the range from about 1.9% (w/w) to about 2.3% (w/w), in the range from about 2% (w/w) to about 2.4% (w/w).

In a further embodiment, the acidified drinkable dairy product is one wherein the sum of the concentration of casein and whey proteins is in the range from about 0.9% (w/w) to about 3.0% (w/w), such as from about 0.9% (w/w) to about 2.7% (w/w), e.g. in the range from about 1.8% (w/w) to about 2.4% (w/w). Most preferred is a sum of concentration of casein and whey proteins of 2.4% (w/w).

In preferred embodiments, at the most 12% (w/w) of the total protein content in the dairy product originates from acid whey, such as at the most 9% (w/w), e.g. at the most 6% (w/w), including at the most 4% (w/w).

In preferred embodiments, at least 83 % (w/w) of the total protein content in the dairy product originates from the added whey protein, such as at least 85% (w/w), e.g. at least 90% (w/w), including at least 92% (w/w).

The present inventors have found that an increased content of lactose during the making of the dairy product according to the invention may have an influence on obtaining an acidified drinkable dairy product with excellent and improved organoleptic and physical properties. Thus, in a preferred embodiment, the lactose is present in the dairy product according to the invention in an amount from about 4% to about 6% by weight of the dairy product, such as from about 3.5% to 5%, including from about 3% to 4%.

Although the acidified drinkable dairy product is based on acid whey, the pH of the resulting dairy product matches the pH of traditional produced drinking yoghurt. Thus, in useful embodiments, the drinkable, acidified dairy product has a pH which is in the range between 4.0 and 4.5.

In a further useful embodiment, the dairy product has a viscosity at a temperature of 10°C which is from 50-400 centipoise (cP), calculated by the method described in the Example 5. For example, the viscosity of the drinkable, acidified dairy product may be in the range of 60-400 cP, and preferably in the range of 80-300 cP.

As described above, it is desirable that a drinkable, acidified dairy product is stable, i.e. that it has a prolonged shelf life and/or storage stability, which implies that there is substantially no change of the organoleptic properties of the product. A prolonged shelf life is to be seen as a prerequisite for a drinking product or beverage according to the invention to be an attractive beverage on the market. Thus, in a preferred embodiment, the drinkable, acidified dairy product according to the invention has storage stability such that substantially no change of the organoleptic properties of said dairy product occurs after storage for 4 weeks at a temperature of 5°C.

Further disclosed herein is a fruit flavoured smoothie drink comprising drinkable, acidified dairy product according to the invention. The term "smoothie drink" relates in the present context to an acidified dairy based beverage which is blended, chilled and made from fruit, such as fresh or frozen fruit, or a fruit blend, a fruit juice, an extract from fruit, or a concentrate of fruit or of fruit juice. According to specific embodiments, the amount of fruit added corresponds to 2-20% (w/w) of the total weight of the dairy product, such as 5-15% (w/w), 7.5-12.5% (w/w), or such as 8-12% (w/w). In the presently most preferred embodiments the fruit is added in an amount corresponding to 10% (w/w) of the total weight of the dairy product.

It should be noted that embodiments and features described in the context of one of the aspects of the present invention also apply to the other aspects of the invention.

Throughout this specification the word "comprise", or variations such as "comprises" or "comprising", will be understood to imply the inclusion of a stated element, integer or step, or group of elements, integers or steps, but not the exclusion of any other element, integer or step, or group of elements, integers or steps. In addition, the terms "at least one" and "one or more" are in this specification used interchangeably.

The invention will now be described in further details in the following non-limiting figures and examples.

Figure 1 represents a first embodiment of the present invention and shows a schematic overview of the process according to the invention for making a drinkable fermented dairy product based on acid whey. In this case all the ingredients for the dairy product are directly mixed before fermentation. The casein/whey protein-ratio is from 0.5:99.5 to 4:96.

Referring to figure 1, all ingredients, e.g. whey acid, cream, permeate, whey protein, carbohydrate and water, for the dairy product are mixed together in a casein/whey protein-ratio from 0.5:99.5 to 4:96. After mixing the mixture is subjected to a pasteurization treatment. A starter culture is added to the pasteurized mixture.

After the addition of the starter culture there are two possible options, depending on the whether the fermentation take place before (option 1) or after filling in bottles (option 2).

According to option 1, the fermentation is run until pH is below 4.6. The fermented product is cooled down and flavouring concentrate is added. Thereafter the resulting fermented drinkable dairy product is filled in bottles.

According to option 2, flavouring concentrate is added after the addition of the starter culture and the inoculated, flavoured mixture is filled into bottles. The fermentation is run until pH is below 4.6 and stopped by cooling.

Figure 2 represents a second embodiment of the present invention and shows a schematic overview of the process according to the invention for making a drinkable fermented dairy product based on acid whey. In this case the acid whey portion and the casein portion are heat treated separately. The heat treated portions are subsequently mixed and followed by fermentation. The casein/whey protein-ratio is from 0.5:99.5 to 12:88.

Referring to figure 2, the ingredients for the acid whey portion, e.g. whey acid, carbohydrate, whey protein, are mixed and pasteurized. Parallel, the ingredients for the casein portion, e.g. water, cream, whey protein and carbohydrate, are mixed and pasteurized. The two pasteurized portions are mixed together in a casein/whey protein-ratio from 4:96 to 12:88. Subsequently, a starter culture is added to the pasteurized mixture comprising the two portions.

After the addition of the starter culture there are two possible options, depending on the whether the fermentation take place before (option 1) or after filling in bottles (option 2).

According to option 1, the fermentation is run until pH is below 4.6. The fermented product is cooled down and flavouring concentrate is added. Thereafter the resulting fermented drinkable dairy product is filled in bottles.

According to option 2, flavouring concentrate is added after the addition of the starter culture and the inoculated, flavoured mixture is filled into bottles. The fermentation is run until pH is below 4.6 and stopped by cooling.

**Examples**

Example 1 - Drinkable fermented dairy product based on acid whey from quark production with separate heat treatments of an acid whey-containing portion and a casein-containing portion

1.1. Materials and methods

Four different drinking yoghurts were produced in the trials 1-4. In each trial, two different portions, an acid whey portion and a casein portion, were prepared, separately heat treated, and finally combined and fermented. The ingredients and chemical composition of the portions are described in the Tables 1.1-1.4

The general outline of the procedure used in this example is shown in Fig. 2.

Table 1.1 Recipe - Trial 1 (Separate heating of acid whey portion and casein portion, weight ratio between casein and whey protein approx. 0.5:99.5)

|  | Acid whey portion | Casein portion | Combined portions (50:50) |
|---|---|---|---|
| **Ingredients (kg)** | | | |
| Acid whey | 87 |  | 43.50 |
| Unsalted Butter |  | 3.60 | 1.80 |
| WPC-80 |  | 4.36 | 2.18 |
| Sodium Caseinate |  |  |  |
| Whey powder | 6.2 |  | 3.1 |
| Water | 6.8 | 80.04 | 43.42 |
| Sucrose |  | 12 | 6 |
| **Chemical composition (weight percent)** | | | |
| Milk fat |  |  | 1.60 |
| Total protein |  |  | 2.30 |
| Casein |  |  | 0.01 |
| Whey protein |  |  | 2.29 |
| Carbohydrate |  |  | 10.50 |
| Water |  |  | 84.78 |
| Ash |  |  | 0.82 |

The whey powder used in the all the trials contained approx. 12% (w/w) protein, 1% (w/w) ash, 2% (w/w) fat, 82% (w/w) lactose, and 5% (w/w) water.

The WPC-80 used in the all the trials contained approx. 80% (w/w) protein, 13% (w/w) lactose, 1% (w/w) ash, 1% (w/w) fat, 5% (w/w) water.

All dairy-related ingredients used in the trials were based on bovine milk.

Table 1.2 Recipe - Trial 2 (Separate heating of acid whey and casein; weight ratio between casein and whey protein approx. 4:96)

| | Acid whey portion | Casein portion | Combined portions (50:50) |
|---|---|---|---|
| **Ingredients (kg)** | | | |
| Acid whey | 87.0 | | 43.5 |
| Unsalted Butter | | 3.6 | 1.8 |
| WPC-80 | | 4.12 | 2.06 |
| Sodium Caseinate | | 0.20 | 0.10 |
| Whey powder | 6.20 | | 3.10 |
| Water | 6.8 | 80.08 | 43.45 |
| Sucrose | | 12.0 | 6.00 |
| **Chemical composition (weight percent)** | | | |
| Milk fat | | | 1.6 |
| Total protein | | | 2.3 |
| Casein | | | 0.09 |
| Whey protein | | | 2.21 |
| Carbohydrate | | | 10.49 |
| Water | | | 84.77 |
| Ash | | | 0.84 |

Table 1.3 Recipe - Trial 3 (Separate heating of acid whey and casein; weight ratio between casein and whey protein approx. 8:92)

| | Acid whey portion | Casein portion | Combined portions (50:50) |
|---|---|---|---|
| **Ingredients (kg)** | | | |
| Acid whey | 87.0 | | 43.5 |
| Unsalted Butter | | 3.6 | 1.8 |
| WPC-80 | | 3.9 | 1.95 |
| Sodium Caseinate | | 0.4 | 0.20 |
| Whey powder | 6.1 | | 3.05 |
| Water | 6.9 | 80.1 | 43.5 |
| Sucrose | | 12.0 | 6.0 |
| **Chemical composition (weight percent)** | | | |
| Milk fat | | | 1.6 |
| Total protein | | | 2.3 |
| Casein | | | 0.18 |
| Whey protein | | | 2.12 |
| Carbohydrate | | | 10.44 |
| Water | | | 84.83 |
| Ash | | | 0.83 |

Table 1.4 Recipe - Trial 4 (Separate heating of acid whey and casein; weight ratio between casein and whey protein approx. 12:88)

| | Acid whey portion | Casein portion | Combined portions (50:50) |
|---|---|---|---|
| **Ingredients (kg)** | | | |
| Acid whey | 87.0 | | 43.50 |
| Unsalted Butter | | 3.6 | 1.80 |
| WPC-80 | | 3.7 | 1.85 |
| Sodium Caseinate | | 0.6 | 0.30 |
| Whey powder | 6.0 | | 3.00 |
| Water | 7.0 | 80.1 | 43.55 |
| Sucrose | | 12.0 | 6.00 |
| **Chemical composition (weight percent)** | | | |
| Milk fat | | | 1.60 |
| Total protein | | | 2.30 |
| Casein | | | 0.28 |
| Whey protein | | | 2.02 |
| Carbohydrate | | | 10.40 |
| Water | | | 84.88 |
| Ash | | | 0.82 |

The ash fraction of the combined portions contained the usual salts and small molecules found in milk products and the lactic acid of the acid whey.

All ingredients of the acid whey portion were mixed together. The mixture was left for swelling/hydration for 30 minutes, then pasteurized at 95°C for 5 minutes, homogenized in two steps at 200 and 50 bar, respectively, and subsequently cooled to 5°C.

All ingredients for the casein portion were mixed together. The mixture was allowed to swell/hydrate for 30 minutes, then pasteurized at 95°C for 5 minutes, homogenized in two steps at 200 and 50 bar, respectively, and subsequently cooled to 5°C.

The acid whey portion and the casein portion were mixed in a ratio 50:50 w/w. Subsequently, a thermophilic yoghurt culture (mixed strain culture YC-470 containing *Streptococcus thermophilus* and *Lactobacillus delbrueckii* subsp. *bulgaricus,* available from Chr. Hansen) was added to the mixture in a dosage of 0.02%.

The inoculated composition was moved into a blast cooler and the temperature was raised to 42°C. Finally, the composition was filled into bottles at room temperature.

The filled bottles were kept at a temperature of 42°C for about 4.5 hours until the pH was 4.7. The bottles were then cooled to 15°C and finally moved to a cold storage for a final cooling.

The final pH after 24 hours was approximately 4.45.

1.2 Tests

*Detection of the sandiness*

The evaluation of sandiness was performed by sensory panel of 5 trained persons.

The sandiness-test involves tasting the trial product and assessing the perceived presence or non-presence of small particles in the product. If one feels the presence of small particles in the product while tasting it, it is deemed sandy.

*Measurement of syneresis and viscosity*

The degree of syneresis was determined according to Example 4

The viscosity was measured at 10°C after 48 hours of storage, by means of Haake Rheostress RS1[©] according to the protocol described in Example 5.

1.3 Results

The results of the tests are shown in Table 1.5.

Table 1.5 Results of the trials 1-4

|  | Trials | | | |
|---|---|---|---|---|
|  | 1 | 2 | 3 | 4 |
| Casein:Whey protein ration (w/w) | 0.5:99.5 | 4:96 | 8:92 | 12:88 |
| Syneresis (%) | 2 | 4 | 5 | 5 |
| Sandy (no/yes) | No | no | No | No |
| Viscosity (cP) | 100 | 140 | 190 | 250 |
| Acceptable quality | Yes | Yes | Yes | Yes |

All four trials provided drinkable acidified dairy products having an acceptable level of syneresis and an acceptable level of sandiness.

Additionally, the starter culture YC- 470 seemed to be an example of a starter culture which is capable of performing an effective fermentation despite the low starting pH (pH 5.2- 6.0) , and which provides high quality end products. It is therefore possible to use a yoghurt starter culture such as YC- 470 to ferment a direct mix of acid whey and casein before fermentation without significantly longer fermentation time than normal (normal 4- 5 hours) , or reduction in end product quality.

Example 2: Drinkable fermented dairy product based on acid whey from Quark production and combined heat treatment of acid whey and casein

2.1. Materials and methods:

Four different drinking yoghurts were produced in the trials 5-8. In each trial was performed with a different mixture of casein, whey protein (both from acid whey and sweet whey-based whey protein concentrate), milk fat, lactose and sucrose. The ingredients and chemical composition of the mixtures are described in the Tables 2.1

The general outline of procedure used in Example 2 is shown in Fig. 1.

Table 2.1 Recipes of Trials 5-8 - Combined heating of acid whey and casein

|  | Trials | | | |
|---|---|---|---|---|
|  | 5 | 6 | 7 | 8 |
| **Ingredients (kg)** | | | | |
| Acid whey | 43.50 | 43.5 | 43.5 | 43.50 |
| Unsalted Butter | 1.80 | 1.8 | 1.8 | 1.80 |
| WPC-80 | 2.18 | 2.06 | 1.95 | 1.85 |
| Sodium Caseinate | 0.00 | 0.10 | 0.20 | 0.30 |
| Whey powder | 3.1 | 3.10 | 3.05 | 3.00 |
| Water | 43.42 | 43.45 | 43.5 | 43.55 |
| Sucrose | 6 | 6.00 | 6.0 | 6.00 |
| **Chemical composition (weight percent)** | | | | |
| Milk fat | 1.60 | 1.6 | 1.6 | 1.60 |
| Total protein | 2.30 | 2.3 | 2.3 | 2.30 |

(continued)

| Chemical composition (weight percent) | | | | |
|---|---|---|---|---|
| Casein | 0.01 | 0.09 | 0.18 | 0.28 |
| Whey protein | 2.29 | 2.21 | 2.12 | 2.02 |
| Carbohydrate | 10.50 | 10.49 | 10.44 | 10.40 |
| Water | 84.78 | 84.77 | 84.83 | 84.88 |
| Ash | 0.82 | 0.84 | 0.83 | 0.82 |
| Casein:Whey protein ration (w/w) | 0.5:99.5 | 4:96 | 8:92 | 12:88 |

The ash fraction of the mixtures contained the usual salts and small molecules found in milk products and lactic acid from acid whey.

All ingredients were mixed together with water. The mixture was left for swelling/hydration for 30 minutes, then pasteurized at 95°C for 5 minutes, homogenized in two steps at 200 and 50 bar, respectively, and subsequently cooled to 42°C. The pH of the mixture was between 5.4 and 6.2. Subsequently, a thermophilic yoghurt culture (mixed strain culture YC-470 containing *Streptococcus thermophilus* and *Lactobacillus delbrueckii* subsp. *bulgaricus,* available from Chr. Hansen) was added at a dosage of 0.02%.

At pH 4.57 the inoculated composition was moved into a blast cooler and cooled-down to 10°C to stop the fermentation. Finally, fruit juice was added and filled into bottles at room temperature.

Optionally, the fruit juice or any other flavouring concentrate can be added and filled in bottles after the addition of the starter culture to the heat treated mixture and thus before the fermentation is stopped.

The final pH after 24 hours was approximately 4.3 - 4.45.

2.2 Tests

See Example 1.2.

2.3 Results

Table 2.2 Results of the trials 5-8

| | Trials | | | |
|---|---|---|---|---|
| | 5 | 6 | 7 | 8 |
| Casein:Whey protein ration (w/w) | 0.5:99.5 | 4:96 | 8:92 | 12:88 |
| Syneresis (%) | 3 | 5 | 18 | 21 |
| Viscosity (cP) | 60 | 70 | 85 | 95 |
| Sandy (yes/no) | No | No | Yes | Yes |
| Acceptable quality | Yes | Yes | No | No |

The results indicate that it is possible to obtain an acceptable drinkable dairy product by mixing all the ingredients, and both heat treat and ferment the combined mixture, particularly when the ratio of casein:whey protein was in the range of 0.5:99.5 - 4:96. Keeping the weight ratio between casein:whey protein in this range prevents precipitation during pasteurization, which otherwise would result in a grainy/sandy end products.

Example 3 - Method for screening for further useful starter cultures

Given the technical means that are provided with the present invention further useful starter cultures are easily identified by the following procedure.

*Screening for pH-tolerant starter cultures*

All ingredients specified under Example 2 - Trial 5, are mixed together with water. The mixture is left for swelling/ hydration for 30 minutes, then pasteurized at 95°C for 5 minutes, homogenized in two steps at 200 and 50 bar, respectively, and subsequently cooled to 42°C. The pH of the mixture is between 5.5 and 6.2. If the casein concentration is 4% or above the casein and acid whey portion may be heat treated separately.

The mixture is divided into small portions, one portion for each starter culture to be tested. Subsequently, a broad range of different starter cultures are selected and each selected starter culture is inoculated in one of the above small portions at a specific dosage depending on the type of starter culture to be tested, e.g. 0.02%. All inoculated portions are incubated at a temperature of 42°C for about 4.5 hours until the pH is 4.7. The fermentation is stop by moving the fermented portions into a blast cooler and cooled-down to 10°C.

Each fermented portion is subsequently evaluated by measurement of the organoleptics characteristics performed by a sensorial panel of 5 trained persons, as described above and the starter culture performing best under low pH conditions, e.g. at a pH below 6.6 or a pH between 5.2 and 6.2, is selected for further use.

Example 4 - Method of determining syneresis of a drinking yoghurt

Principle:

The syneresis measurement is performed manually. The amount of syneresis is established by means of the figures down the side of the syneresis jar. This amount is calculated as a percentage.

Materials:

For this procedure the following are needed:

- Syneresis glasses
- Cool storage (4°C)

Procedure:

1. Sample preparation

Exactly 50 mL of each sample of drinkable dairy product is filled into a 50 mL graduated, polyproylene cylinder having an inner diameter of approx. 3 cm, and the cylinder is sealed with a cover or lid. The filled cylinder is subsequently stored at 4°C for 72 hours.

3. Registration

The graduated cylinder is taken from the cold storage and the syneresis is registered by visually observing the volume (mL) of clear liquid on top of the remaining drinkable dairy product. Be careful not to shake the cylinder.

4. Results

The degree of syneresis by the formula:

$$\text{Degree of syneresis} = \text{volume of clear liquid}/50 \text{ mL} * 100\%$$

For example, 2 ml of clear liquid corresponds to a degree of syneresis of 4%.

Example 5 - Measurement of viscosity

Principle:

The viscosity of liquid products was measured on a rheometer (Haake rheostress) with a concentric system (bob/cup method). The measurement was performed at 10°C since the viscosity is temperature dependent. The temperature was controlled by a water bath. The viscosity was converted to cP values. The cP values are proportional to the viscosity. The higher cP values the higher viscosity.

There were always made double repetition. The measurement was made three days from the production day.

*Method setup:*

The parameters for the program were as follows:

- Step 1: Zero point
- Step 2: Controlled Stress of 1.00 Pa for 0.50 min. at 5.00 °C. Frequency of 1000 Hz. 1 data points are collected
- Step 3: Controlled Rate of 50.00 1/s for 2.00 min. at 5.00 °C. 60 data points are collected
- Step 4: Lift apart

*Materials:*

For this procedure the following were needed:

- Haake rheostress 1 rheometer
- Bob: Z34 DIN 53019 series
- Cup: Z34 DIN53018 series probes
- Water bath Haake k20/Haake DC50
- Water bath Thermo Haake V26

*Conditions:*

Method: Controlled rate
Shear rate: 50 s-1
Initial resting period: 30 sec.
Sampling period: 2 minutes
Sampling rate: 2 sec/data sampling
Temperature: 5°C

*Procedure:*

1. Sample preparation

Each sample was tapped into bottles during process and stored for 2 days in a cool storage (4°C). The bottles were placed in the laboratory cooler (6°C) to temperate for 1 day.

2. Setup

The water bath for the HAAKE rheostress was adjusted at 5°C.
The program for measurement of the product on the Haake rheostress was set up. The bob/cup system was installed.

3. Measuring

The Haake rheostress system was tared and the data-sampling program was started.
40 ml sample was added to the cup. Only the sample that was to be analysed was removed from the cool storage.

4. Cleaning

When the analysis was finished the bob/cup system was dismantled and cleaned with water and soap and afterwards with ionized water. The bob/cup system was wiped and installed again for the next sample.

*Result*

The cP-value read after 1½ minute was reported.

**Claims**

1. A process for making an acidified, drinkable dairy product without coagulum formation after the acidification, said drinkable dairy product having a casein:whey protein ratio of from 0.5:99.5 to 12:88 (w/w), the process comprising the steps of

   a) providing a heat treated composition or a composition of heat treated portions having a casein:whey protein ratio of 0.5:99.5 (w/w) to 12:88 (w/w), comprising

   - acid whey,
   - casein,
   - whey protein, and
   - carbohydrate;

   b) adding an acidifying agent to the composition of step a), thereby obtaining a mixture; and
   c) allowing the acidifying agent to reduce the pH of the mixture of step b) thereby producing said drinkable acidified dairy product.

2. The process according to claim 1, wherein the composition of heat treated portions comprises a portion comprising acid whey and a portion comprising casein.

3. The process according to claim 2, wherein the portion comprising acid whey and the portion comprising casein are heat treated separately before being combined in said composition.

4. The process according to any of the claims 1 to 3, wherein the heat treated composition or the composition of heat treated portions has a casein:whey protein ratio of from 0.5:99.5 to 4:96 (w/w).

5. The process according to any of the claims 1 to 6, wherein the pH of the composition of step a) is between 5.4 and 6.2.

6. The process according to any of the preceding claims, wherein the acid whey comprises between 0.4 and 1.0 % (w/w) whey protein.

7. The process according to any of the claims 1 to 6, wherein the carbohydrate may comprise one or more carbohydrate (s) selected from the group consisting of glucose, sucrose, lactose, galactose, fructose, and a combination thereof.

8. The process according to any of the claims 1 to 7, wherein the acidifying agent comprises chemical acidifying agent.

9. The process according to any of the claims 1 to 8, wherein the chemical acidifying agent is a food acid and/or a lactone.

10. The process according to any of the claims 1 to 9, wherein the acidifying agent comprises a starter culture.

11. The process according to any of the claims 1 to 10, wherein the mixture is filled into suitable containers before or during acidification

12. The process according to any of the claims 1 to 11, wherein the mixture is filled into suitable containers after the acidification.

13. A drinkable acidified dairy product comprising casein and acid whey protein in a casein:whey protein ratio of from 0.5:99.5 to 3.9:96.1 (w/w).

14. The drinkable acidified dairy product according to claim 13, wherein the casein concentration is in the range from about 0.0045% (w/w) to about 0.12% (w/w).

**15.** The drinkable acidified dairy product according to claim 13 or 14, wherein the whey protein concentration is in the range from about 0.70% (w/w) to about 2.99% (w/w).

**16.** The drinkable acidified dairy product according to any of the claims 13 to 15, wherein the sum of the concentration of casein and whey proteins is in the range from about 0.9% (w/w) to about 3% (w/w).

**17.** The drinkable acidified dairy product according to any of the claims 13 to 16, wherein the pH of the product is in the range from about 4.0 - 4.5.

**18.** The drinkable acidified dairy product according to any of the claims 13 to 17, having a viscosity at a temperature of 10°C which is from 50-400 centipoise (cP).

**Patentansprüche**

**1.** Verfahren zur Herstellung eines angesäuerten, trinkbaren Milcherzeugnisses ohne Koagulum-Bildung nach der Ansäuerung, wobei das trinkbare Milcherzeugnis ein Casein: Molkenprotein-Verhältnis von 0,5:99,5 bis 12:88 (w/w) aufweist, wobei das Verfahren die folgenden Schritte aufweist:

a) Bereitstellen einer hitzebehandelten Zusammensetzung oder einer Zusammensetzung hitzebehandelter Anteile, die ein Casein:Molekeprotein-Verhältnis von 0,5:99,5 (w/w) bis 12:88 (w/w) aufweist, umfassend

- saure Molke,
- Casein,
- Molkenprotein und
- Kohlenhydrat;

b) Hinzufügen eines Säuerungsmittels zu der Zusammensetzung aus Schritt a), wodurch ein Gemisch erhalten wird; sowie

c) Verringerung des pH-Werts des Gemisches aus Schritt b) durch das Säuerungsmittel, wodurch ein trinkbares angesäuertes Milcherzeugnis hergestellt wird.

**2.** Verfahren nach Anspruch 1, wobei die Zusammensetzung hitzebehandelter Anteile einen Anteil umfasst, der saure Molke umfasst und einen Anteil, der Casein umfasst.

**3.** Verfahren nach Anspruch 2, wobei der Anteil, der saure Molke umfasst und der Anteil, der Casein umfasst getrennt voneinander hitzebehandelt werden, bevor sie in der Zusammensetzung vereinigt werden.

**4.** Verfahren nach einem der Ansprüche 1 bis 3, wobei die hitzebehandelte Zusammensetzung oder die Zusammensetzung hitzebehandelter Anteile ein Casein: Molkenprotein-Verhältnis von 0,5:99,5 bis 4:96 (w/w) aufweist.

**5.** Verfahren nach einem der Ansprüche 1 bis 6, wobei der pH-Wert der Zusammensetzung aus Schritt a) zwischen 5,4 und 6,2 liegt.

**6.** Verfahren nach einem der vorherigen Ansprüche, wobei die saure Molke zwischen 0,4 und 1,0 % (w/w) Molkenprotein umfasst.

**7.** Verfahren nach einem der Ansprüche 1 bis 6, wobei das Kohlenhydrat ein oder mehrere Kohlenhydrate umfassen kann ausgewählt aus der Gruppe bestehend aus Glucose, Sucrose, Lactose, Galactose, Fructose und einer Kombination davon.

**8.** Verfahren nach einem der Ansprüche 1 bis 7, wobei das Säuerungsmittel ein chemisch säuerndes Mittel umfasst.

**9.** Verfahren nach einem der Ansprüche 1 bis 8, wobei das chemisch säuernde Mittel eine Nahrungsmittelsäure und/oder ein Lacton ist.

**10.** Verfahren nach einem der Ansprüche 1 bis 9, wobei das Säuerungsmittel eine Startkultur ist.

**11.** Verfahren nach einem der Ansprüche 1 bis 10, wobei das Gemisch vor oder während der Ansäuerung in geeignete Behälter abgefüllt wird.

**12.** Verfahren nach einem der Ansprüche 1 bis 11, wobei das Gemisch nach der Ansäuerung in geeignete Behälter abgefüllt wird.

**13.** Trinkbares angesäuertes Milcherzeugnis, das Casein und saures Molkenprotein in einem Casein:Molkenprotein-Verhältnis von 0,5:99,5 bis 3,9:96,1 (w/w) umfasst.

**14.** Trinkbares angesäuertes Milcherzeugnis nach Anspruch 13, wobei die Caseinkonzentration im Bereich von etwa 0, 0045% (w/w) bis etwa 0,12% (w/w) liegt.

**15.** Trinkbares angesäuertes Milcherzeugnis nach Anspruch 13 oder 14, wobei die Molkeproteinkonzentration im Bereich von etwa 0,70% (w/w) bis etwa 2,99% (w/w) liegt.

**16.** Trinkbares angesäuertes Milcherzeugnis nach Anspruch 13 bis 15, wobei die Summe der Konzentration von Casein und Molkenproteinen im Bereich von etwa 0.9% (w/w) bis etwa 3% (w/w) liegt.

**17.** Trinkbares angesäuertes Milcherzeugnis nach Anspruch 13 bis 16, wobei der pH-Wert des Produkts im Bereich von etwa 4,0 - 4,5 liegt.

**18.** Trinkbares angesäuertes Milcherzeugnis nach einem der Ansprüche 13 bis 17, das eine Viskosität bei einer Temperatur von 10 °C aufweist, die 50-400 Centipoise (cP) beträgt.

**Revendications**

**1.** Procédé de production d'un produit lacté acidifié buvable sans formation de coagulum après l'acidification, ledit produit lacté buvable ayant un rapport de caséine : lactosérum de 0,5:99,5 à 12:88 (p/p), le procédé comprenant les étapes de

a) fourniture d'une composition traitée thermiquement ou d'une composition de portions traitées thermiquement ayant un rapport de caséine : lactosérum de 0,5:99,5 (p/p) à (12:88) (p/p), comprenant

- du lactosérum acide,
- de la caséine,
- une protéine de lactosérum, et
- un glucide ;

b) l'addition d'un agent acidifiant à la composition de l'étape a), donnant ainsi un mélange ; et
c) la réduction de l'agent acidifiant pour réduire le pH du mélange de l'étape b), produisant ainsi ledit produit lacté acidifié buvable.

**2.** Procédé selon la revendication 1, dans lequel la composition des portions traitées thermiquement comprend une portion comprenant du lactosérum acide et une portion comprenant de la caséine.

**3.** Procédé selon la revendication 2, dans lequel la portion comprenant du lactosérum acide et la portion comprenant de la caséine sont traitées thermiquement séparément avant d'être combinées dans ladite composition.

**4.** Procédé selon l'une quelconque des revendications 1 à 3, dans lequel la composition traitée thermiquement ou la composition des portions traitées thermiquement a un rapport de caséine : protéine de lactosérum de 0,5:99,5 à 4:96 (p/p).

**5.** Procédé selon l'une quelconque des revendications 1 à 6, dans lequel le pH de la composition de l'étape a) se situe entre 5,4 et 6,2.

**6.** Procédé selon l'une quelconque des revendications précédentes, dans lequel le lactosérum acide comprend entre 0,4 et 1,0 % (p/p) de protéine de lactosérum.

**7.** Procédé selon l'une quelconque des revendications 1 à 6, dans lequel le glucide peut comprendre un ou plusieurs glucide(s) choisi(s) dans le groupe comprenant le glucose, le saccharose, le lactose, le galactose, le fructose et une combinaison de ceux-ci.

**8.** Procédé selon l'une quelconque des revendications 1 à 7, dans lequel l'agent acidifiant comprend un agent acidifiant chimique.

**9.** Procédé selon l'une quelconque des revendications 1 à 8, dans lequel l'agent acidifiant chimique est un acide alimentaire et/ou une lactone.

**10.** Procédé selon l'une quelconque des revendications 1 à 9, dans lequel l'agent acidifiant comprend une culture starter.

**11.** Procédé selon l'une quelconque des revendications 1 à 10, dans lequel le mélange est versé dans des récipients appropriés avant ou pendant l'acidification.

**12.** Procédé selon l'une quelconque des revendications 1 à 11, dans lequel le mélange est versé dans des récipients appropriés après l'acidification.

**13.** Produit lacté acidifié buvable comprenant de la caséine et une protéine de lactosérum acide en un rapport de caséine : protéine de lactosérum de 0,5:99,5 à 3,9:96,1 (p/p).

**14.** Produit lacté acidifié buvable selon la revendication 13, dans lequel la concentration de caséine est de l'ordre d'environ 0,0045 % (p/p) à environ 0,12 % (p/p).

**15.** Produit lacté acidifié buvable selon la revendication 13 ou 14, dans lequel la concentration en protéine de lactosérum est de l'ordre d'environ 0,70 % (p/p) à environ 2,99 % (p/p).

**16.** Produit lacté acidifié buvable selon l'une quelconque des revendications 13 à 15, dans lequel le total de la concentration de caséine et de protéines de lactosérum est de l'ordre d'environ 0,9 % (p/p) à environ 3 % (p/p).

**17.** Produit lacté acidifié buvable selon l'une quelconque des revendications 13 à 16, dans lequel le pH du produit est de l'ordre d'environ 4,0 à 4,5.

**18.** Produit lacté acidifié buvable selon l'une quelconque des revendications 13 à 17, ayant une viscosité à une température de 10° C qui est de 50 à 400 centipoises (cP).

**Acid whey and casein mixture**

Fig. 1

**Acid whey portion**

**Casein portion**

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008092458 A